# EUROPÄISCHE PATENTSCHRIFT

(11) **EP 2 646 706 B1**
(45) Veröffentlichungstag und Bekanntmachung des Hinweises auf die Patenterteilung: **21.05.2014**
(21) Anmeldenummer: 12703259.7
(22) Anmeldetag: 25.01.2012
(51) Int. Cl.: F16F 1/373

(54) **DÄMPFERLAGER MIT PROFILIERTEM EINLEGER**
SHOCK-ABSORBING BEARING COMPRISING A PROFILED INSERT
PALIER AMORTISSEUR AVEC INSERT PROFILÉ

(30) Priorität: 28.01.2011 DE 102011009756
(43) Veröffentlichungstag der Anmeldung: 09.10.2013
(73) Patentinhaber: BASF SE, 67056 Ludwigshafen (DE)
(72) Erfinder: THYE-MOORMANN, Frank, 49459 Lembruch (DE)
(86) Internationale Anmeldenummer: PCT/EP2012/051151
(87) Internationale Veröffentlichungsnummer: WO 2012/101177

(56) Entgegenhaltungen:
- DE-A1- 3 839 699
- DE-A1- 4 326 197
- DE-A1-102004 027 904
- DE-A1-102005 009 667
- DE-A1-102007 011 209
- DE-A1-102007 023 886

## Beschreibung

Die vorliegende Erfindung betrifft ein Dämpferlager, das ein im Wesentlichen hohlzylinderförmiges Dämpfungselement auf der Basis von zelligen Polyisocyanat-Polyadditionsprodukten sowie einen Einleger umfasst, der von dem Dämpfungselement in radialer und in axialer Richtung zumindest teilweise umschlossen wird. Weiterhin betrifft die Erfindung Automobile, beispielsweise Personenkraftwagen, Lastkraftwagen oder Busse, die erfindungsgemäße Dämpferlager enthalten.

Aus Polyurethanelastomeren hergestellte Dämpferlager werden in Automobilen innerhalb des Fahrwerks verwendet und sind allgemein bekannt, beispielsweise aus DE 10 2004 027 904 A1, DE 10 2005 009 667 A1 oder DE 10 2007 011 209 A1. Sie werden in Automobilen insbesondere als schwingungsdämpfende Federelemente eingesetzt. Dabei übernehmen die Federelemente die Anbindung des Stoßdämpfers an die Karosserie und/oder an Fahrwerkskomponenten.

Ein weiteres Dämpferlager ist aus der DE 3839699 bekannt. Durch eine solche Ankopplung werden Schwingungen gedämpft, entkoppelt oder isoliert, die von der Fahrbahn hervorgerufen und über Rad und Stoßdämpfer weitergeleitet werden, ebenso wie vom Stoßdämpfer selbst hervorgerufene Schwingungen. Die Ankopplung wird so gestaltet, dass kardanische Bewegungen des Stoßdämpfers ermöglicht und die Anforderungen an Kraft-Weg-Kennungen erfüllt werden. Diese Kennungen beeinflussen in Abhängigkeit von der Fahrwerkskonzeption wesentlich das Fahrverhalten und müssen exakt auf den jeweiligen Fahrzeugtyp bzw. die zu entkoppelnden Fahrzeugkomponenten abgestimmt werden. Das Zusammenspiel aus Stoßdämpfer und Dämpferlager stellt die folgenden Funktionen sicher:
- Fahrkomfort
- Fahrsicherheit
- Wank-/Nickabstützung
- Reduktion von Effekten des Radstuckerns und Karosseriezitterns

Bei den aus dem Stand der Technik bekannten Dämpferlagern kommt es vor, dass sich Einleger und Dämpfungselement aufgrund der mechanischen Belastung relativ zueinander bewegen, was Abscherungen oder Abrieb des Dämpfungselements verursacht. Dies hat zur Folge, dass die Dämpfungselemente mechanisch beschädigt werden und die Lebensdauer des Bauteils deutlich verringert wird.

Aufgabe der vorliegenden Erfindung war es, Dämpferlager bereitzustellen, die den hohen Belastungen, wie sie in einem Fahrwerk auftreten, besser standhalten und eine längere Lebensdauer aufweisen.

Diese Aufgabe wird durch den Gegenstand der Erfindung gelöst, wie er in Anspruch 1 wiedergegeben ist. Weitere vorteilhafte Ausführungsformen der Erfindung finden sich in den abhängigen Ansprüchen. Ein weiterer Gegenstand der Erfindung sind Automobile, die eines oder mehrere der erfindungsgemäßen Dämpferlager enthalten.

Erfindungsgemäß umfasst das Dämpferlager ein im Wesentlichen hohlzylinderförmiges Dämpfungselement auf der Basis von zelligen Polyisocyanat-Polyadditionsprodukten sowie einen Einleger. Der Einleger wird in radialer und axialer Richtung zumindest teilweise von dem Dämpfungselement umschlossen. Die Begriffe "Längsachse", "axial", "oben" und "unten" bezeichnen im Folgenden die Orientierung, in der derartige Dämpferlager üblicherweise angebracht sind, z.B. im Fahrwerk eines Automobils. Als "Längsschnitt" wird ein Schnitt parallel zur Längsachse verstanden, als "Querschnitt" ein Schnitt senkrecht zur Längsachse. Als "radial" wird eine Richtung in der Querschnittsebene von der Längsachse weg oder auf sie zu bezeichnet.

Der Einleger weist auf mindestens einer axialen Stirnfläche, die mit dem Dämpfungselement in Verbindung steht, ein Profil mit Vertiefungen und/oder Erhebungen auf. Unter einer Erhebung ist eine zusammenhängende Teilfläche zu verstehen, die in axialer Richtung über die stirnseitige Oberfläche hinausragt. Analog ist unter einer Vertiefung eine zusammenhängende Teilfläche zu verstehen, die in axialer Richtung in die stirnseitige Oberfläche hineinragt. Unregelmäßigkeiten der Oberfläche aufgrund der Rauhigkeit, die üblicherweise im Bereich von 0 bis 50 Mikrometer liegen und im Wesentlichen fertigungsbedingt sind, bleiben bei der Definition von Erhebungen und Vertiefungen unberücksichtigt.

In einer erfindungsgemäßen Ausführungsform ist der Einleger als Scheibe geformt, bevorzugt als kreisförmige Scheibe. Bevorzugt weist der Einleger in der Mitte der Scheibe eine Bohrung auf, durch die beispielsweise die Kolbenstange eines Stoßdämpfers gesteckt und befestigt werden kann. In einer weiteren Ausführungsform weist der Einleger um die Bohrung einen Kragen in axialer Richtung auf. Der Einleger kann aus bekannten, bevorzugt harten Materialien gefertigt sein, beispielsweise Metallen, harten Kunststoffen oder Verbundwerkstoffen. Geeignete Kunststoffe sind z.B. thermoplastisches Polyurethan, Polyamid, Polyethylen, Polypropylen, Polystyrol oder bevorzugt Polyoxymethylen. Bevorzugt kommen Metalle zur Anwendung, besonders bevorzugt Stahl oder Aluminium, insbesondere Aluminium.

Erhebungen und/oder Vertiefungen können einzelne Elemente umfassen, die beispielsweise punktförmig oder kegelstumpfförmig ausgebildet sind, wobei der Querschnitt eines solchen Kegelstumpfes unterschiedliche Formen aufweisen kann, z.B. kreisförmig, oval, rechteckig, quadratisch, sechseckig oder achteckig.

In einer bevorzugten Ausführungsform umfassen die Vertiefungen mehrere Rillen, die nicht alle konzentrisch und nicht alle parallel verlaufen. Die axiale Ausdehnung der Rillen, im Folgenden auch als Tiefe der Rillen bezeichnet, kann über ihre Länge konstant sein oder variieren. Bevorzugt ist die Tiefe der Rillen im Wesentlichen konstant. In einer weiteren bevorzugten Ausführungsform umfassen die Erhebungen mehrere Stege, die nicht alle konzentrisch und nicht alle parallel verlaufen. Die axiale Ausdehnung der Stege, im Folgenden auch als Höhe der Stege bezeichnet, kann über ihre Länge konstant sein oder variieren. Bevorzugt ist die Höhe der Stege im Wesentlichen konstant.

"Im Wesentlichen" bedeutet hierbei, dass geringfügige Unterschiede, die beispielsweise aus dem Fertigungsprozess resultieren oder die im Rahmen der Messungenauigkeit liegen, unberücksichtigt bleiben. Der Begriff "konzentrisch" bezieht sich hier und im Folgenden auf die Drehachse einer möglichen rotatorischen Relativbewegung zwischen dem Einleger und dem Dämpfungselement. In bevorzugten erfindungsgemäßen Ausgestaltungen verläuft diese Drehachse durch den Mittelpunkt im Sinne des geometrischen Schwerpunkts der Querschnittsfläche des Einlegers. Bei einer kreisrunden Querschnittsfläche ist der Mittelpunkt offensichtlich, bei einer rechteckigen Querschnittsfläche beispielsweise ist der Mittelpunkt durch den Schnittpunkt der Diagonalen definiert.

Eine Anordnung der Rillen und/oder Stege gemäß den beiden oben genannten Ausführungsformen bewirkt, dass sowohl jede radiale als auch eine rotatorische Relativbewegung zwischen dem Einleger und dem Dämpfungselement erschwert wird. Dadurch wird der Verschleiß des Bauteils aufgrund eines Abriebs des Dämpfungselements erheblich reduziert.

In einer bevorzugten Ausführungsform weist der Einleger auf mindestens einer axialen, mit dem Dämpfungselement in Verbindung stehenden Stirnfläche ein Profil auf mit einer ersten Gruppe an parallelen Rillen und einer zweiten Gruppe an parallelen Rillen, wobei sich die Rillen der ersten Gruppe und diejenigen der zweiten Gruppe in einem Winkel von 30° bis 90°, besonders bevorzugt von 45° bis 90°, insbesondere von 70° bis 90° kreuzen, wobei unter dem Winkel jeweils der spitze Winkel zu verstehen ist.

In einer weiteren bevorzugten Ausführungsform weist der Einleger auf mindestens einer axialen, mit dem Dämpfungselement in Verbindung stehenden Stirnfläche ein Profil auf mit einer ersten Gruppe an parallelen Stegen und einer zweiten Gruppe an parallelen Stegen, wobei sich die Stege der ersten Gruppe und diejenigen der zweiten Gruppe in einem Winkel von 30° bis 90°, besonders bevorzugt von 45° bis 90°, insbesondere von 70° bis 90° kreuzen, wobei unter dem Winkel jeweils der spitze Winkel zu verstehen ist.

Von der Erfindung sind selbstverständlich auch Kombinationen von Vertiefungen und Erhebungen umfasst, in Bezug auf die oben genannten Ausführungsformen beispielsweise Rillen in der ersten Gruppe, Stege in der zweiten Gruppe, aber auch mehrere Rillen und Stege in jeder Gruppe, gleichmäßig oder ungleichmäßig abwechselnd angeordnet. Bevorzugt weisen die Vertiefungen eine Tiefe und/oder die Erhebungen eine Höhe von jeweils 0,1 mm bis 1 mm, besonders bevorzugt von 0,2 mm bis 0,5 mm auf. Bei Erhebungen oder Vertiefungen, deren Höhe bzw. Tiefe variiert, beziehen sich die Werte der bevorzugten Bereiche auf die jeweiligen minimalen und maximalen Ausdehnungen.

In einer besonders bevorzugten Ausführungsform weist der Einleger auf beiden axialen Stirnflächen ein Profil auf, das Vertiefungen und/oder Erhebungen umfasst. Auch bei dieser Ausführungsform können entweder nur Vertiefungen, nur Erhebungen oder Vertiefungen in Kombination mit Erhebungen vorhanden sein.

Ein erfindungsgemäßes Profil mit Erhebungen und/oder Vertiefungen kann auf unterschiedliche Weise erzeugt werden. Wird der Einleger beispielsweise durch Spritzgießen hergestellt, z.B. im Fall eines Einlegers aus Kunststoff, werden vorteilhaft die Negative der Erhebungen und Vertiefungen in der Spritzgussform vorgesehen, sodass die Erhebungen und Vertiefungen bei der Herstellung des Einlegers gebildet werden, und der Einleger nach der Entnahme aus der Form zumindest hinsichtlich des Profils nicht mehr nachbearbeitet werden muss. In analoger Weise kann der Einleger auch durch Druckguss hergestellt werden, beispielsweise aus Aluminium. Ein erfindungsgemäßes Profil kann auch nachträglich auf einen Einleger aufgebracht werden. Dies kann vorteilhaft durch entsprechende Stanz- oder Umformwerkzeuge wie Druckplatten erfolgen. Weiterhin kann ein Profil durch Rändelung mit Hilfe entsprechender Rändelwerkzeuge erzeugt werden. Geeignete Werkzeuge sind dem Fachmann bekannt.

Der Außendurchmesser des Dämpfungselements beträgt bevorzugt von 45 mm bis 85 mm, besonders bevorzugt von 60 mm bis 75 mm, insbesondere von 63 mm bis 68 mm. Unter dem Außendurchmesser ist der größte Abstand zwischen zwei gegenüberliegenden Punkten auf der radialen äußeren Mantelfläche des Dämpfungselements zu verstehen. Gegebenenfalls auf der Mantelfläche vorhandene Konturelemente wie Noppen, die sich in radialer Richtung über die Mantelfläche erheben, bleiben dabei unberücksichtigt.

Die Höhe des Dämpfungselements beträgt bevorzugt von 15 mm bis 50 mm, besonders bevorzugt von 20 mm bis 35 mm, insbesondere von 22 mm bis 28 mm. Unter der Höhe wird der Abstand in axialer Richtung zwischen der oberen und unteren Stirnseite des Dämpfungselements verstanden. Etwaige Konturelemente wie Noppen, die sich in axialer Richtung über die jeweilige Stirnseite erheben, bleiben bei der Bestimmung der Höhe unberücksichtigt. Die Stirnseiten können miteinander verbunden sein, beispielsweise bei einem einteiligen Dämpfungselement. Die Stirnseiten können auch zu unterschiedlichen Einzelelementen gehören, beispielsweise im Fall eines mehrteiligen Dämpfungselements.

Der Außendurchmesser des Einlegers beträgt bevorzugt von 40 mm bis 80 mm, besonders bevorzugt von 50 mm bis 70 mm, insbesondere von 55 mm bis 65 mm. In dem Bereich, der vom Dämpfungselement umfasst wird, beträgt die Höhe des Einlegers bevorzugt von 3 mm bis 20 mm, besonders bevorzugt von 5 mm bis 10 mm, insbesondere von 6 mm bis 8 mm.

In einer bevorzugten Ausführungsform wird der Einleger in radialer Richtung von außen nach innen von dem Dämpfungselement von mindestens 1 mm bis 10 mm, besonders bevorzugt von 3 mm bis 5 mm umschlossen. Besonders vorteilhaft wird der Einleger vom Dämpfungselement in Umfangsrichtung vollständig umschlossen, sowohl in radialer Richtung als auch bezüglich der Überdeckung in axialer Richtung. Dadurch werden im eingebauten Zustand des Dämpferlagers Schallbrücken vermieden und unerwünschte Geräuschübertragungen weitestgehend reduziert.

In einer weiteren erfindungsgemäßen Ausführungsform umfasst das Dämpfungselement mindestens zwei Einzelelemente. In einer bevorzugten Ausgestaltung umfasst das Dämpfungselement drei Einzelelemente, von denen jeweils eines auf jeder Stirnseite des Einlegers und ein weiteres in radialer Richtung als Rand um den Einleger angeordnet ist. Diese Ausgestaltung bietet den Vorteil, dass das Dämpferlager hinsichtlich der axialen und radialen Dämpfungseigenschaften individuell und weitgehend unabhängig voneinander abgestimmt werden kann. Beispielsweise können die axial angeordneten Einzelelemente und das radial angeordnete Einzelelement unterschiedliche Härten und somit unterschiedliche Dämpfungseigenschaften aufweisen. Auch bei dieser mehrteiligen Ausführungsform ist es besonders vorteilhaft, wenn der Einleger vom Dämpfungselement in Umfangsrichtung vollständig umschlossen wird.

Erfindungsgemäße Dämpfungselemente sind auf der Basis von zelligen Polyisocyanat-Polyadditionsprodukten gefertigt. Bevorzugt sind erfindungsgemäße Dämpfungselemente auf der Basis von zelligen Polyurethanelastomeren, die Polyharnstoffstrukturen enthalten können, gefertigt. Zellig bedeutet in diesem Zusammenhang, dass die Zellen bevorzugt einen Durchmesser von 0,01 mm bis 0,5 mm, besonders bevorzugt von 0,01 mm bis 0,15 mm aufweisen.

Besonders bevorzugt haben die zelligen Polyisocyanat-Polyadditionsprodukte mindestens eine der folgenden Materialeigenschaften: eine Dichte nach DIN EN ISO 845 zwischen 200 und 1100 kg/m³, bevorzugt zwischen 270 und 900 kg/m³, eine Zugfestigkeit nach DIN EN ISO 1798 von ≥2,0 N/mm², bevorzugt zwischen 2 und 8 N/mm², eine Bruchdehnung nach DIN EN ISO 1798 von ≥200 %, bevorzugt ≥ 230 %, besonders bevorzugt zwischen 300 bis 700 % oder eine Weiterreißfestigkeit nach DIN ISO 34-1 B (b) von ≥ 6 N/mm, bevorzugt von ≥ 8 N/mm, besonders bevorzugt von ≥ 10 N/mm. In weiter bevorzugten Ausführungsformen besitzt das zellige Polyisocyanat-Polyadditionsprodukt zwei, weiter bevorzugt drei dieser Materialeigenschaften, besonders bevorzugte Ausführungsformen besitzen alle vier der genannten Materialeigenschaften.

Elastomere auf der Basis von zelligen Polyisocyanat-Polyadditionsprodukten und ihre Herstellung sind allgemein bekannt und vielfältig beschrieben, beispielsweise in EP 62 835 A1, EP 36 994 A2, EP 250 969 A1, EP 1 171 515 A1, DE 195 48 770 A1 und DE 195 48 771 A1.

Die Herstellung erfolgt üblicherweise durch Umsetzung von Isocyanaten mit gegenüber Isocyanaten reaktiven Verbindungen. In einer bevorzugten Ausführungsform werden die zelligen Polyurethanelastomeren, auf der Basis der Isocyanate Diisocyanatotoluol (TDI) und Naphthylendiisocyanat (NDI), ganz besonders bevorzugt auf der Basis von 2-,6-Diisocyanatotoluol (TODI) und 1-,5-Naphthylendiisocyanat (5-NDI) hergestellt.

Die Dämpfungselemente auf Basis von zelligen Polyisocyanat-Polyadditionsprodukten werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Dämpfungselements gewährleisten.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktive Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise von 40 bis 95°C, bevorzugt von 50 bis 90°C. Die Herstellung der Formteile wird bevorzugt bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden. Die Formteile sind nach 5 bis 60 Minuten ausgehärtet und damit entformbar. Die Menge des in das Formwerkzeug eingebrachten Reaktionsgemisches wird üblicherweise so bemessen, dass die erhaltenen Formkörper die bereits dargestellte Dichte aufweisen. Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditionsprodukte werden zweckmäßigerweise nach dem one shot-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Zur Herstellung der erfindungsgemäßen Dämpferlager ist es bevorzugt, zunächst den Einleger in das Formwerkzeug einzulegen, dort zu fixieren und danach das Reaktionsgemisch in die Form einzubringen und aushärten zu lassen. Die Formwerkzeuginnenflächen sowie die Oberflächen des Einlegers, die nicht von dem Dämpfungselement umfasst werden, sind dabei bevorzugt mit üblichen Trennmitteln versehen, beispielsweise auf Wachs- oder Silikonbasis oder insbesondere mit wässrigen Seifenlösungen. Dadurch wird gewährleistet, dass sich die fertigen Dämpferlager leicht aus der Form entfernen lassen und gegebenenfalls erforderliche Entgratungen auf dem Einleger leicht durchführbar sind.

Einleger und Dämpfungselement können auch unabhängig voneinander hergestellt werden. Das Dämpferlager wird in diesem Fall dadurch erzeugt, dass der Einleger in das fertige Dämpfungselement eingefügt wird, beispielsweise durch Einclipsen. Bei derartigen Ausführungsformen ist es bevorzugt, wenn der Einleger unter einer Vorspannung in die entsprechende Aussparung im Dämpfungselement gefügt wird, um die Vorteile der Profilierung auf dem Einleger bestmöglich auszunutzen. Eine Vorspannung kann beispielsweise dadurch realisiert werden, dass der axiale Abstand der Aussparung im Dämpfungselement geringer ist als die Höhe des Einlegers in dem Bereich, der sich nach dem Zusammenfügen in der Aussparung befindet.

Anhand der Zeichnungen wird im Folgenden die Erfindung weiter erläutert, wobei die Zeichnungen als Prinzipdarstellungen zu verstehen sind, sofern keine konkreten Maße angegeben sind. Sie stellen keine Beschränkung der Erfindung, beispielsweise im Hinblick auf konkrete Abmessungen oder Ausgestaltungsvarianten von Bauteilen des Dämpfungselementes, dar. Bei Zeichnungen, die mit Maßangaben versehen sind, beziehen sich diese auf die Einheit Millimeter. Es zeigen:
- Fig. 1:: Prinzipskizze eines erfindungsgemäßen Dämpferlagers in dreidimensionaler Ansicht
- Fig. 2:: Längsschnitt durch ein erfindungsgemäßes Dämpferlager
- Fig. 3:: Längsschnitt durch einen erfindungsgemäßen Einleger
- Fig. 4:: Draufsicht auf einen erfindungsgemäßen Einleger
- Fig. 5:: Prinzipskizze eines erfindungsgemäßen Dämpferlagers mit mehrteiligem Dämpfungselement
- Fig. 6:: Prinzipskizze eines erfindungsgemäßen Dämpferlagers im eingebauten Zustand

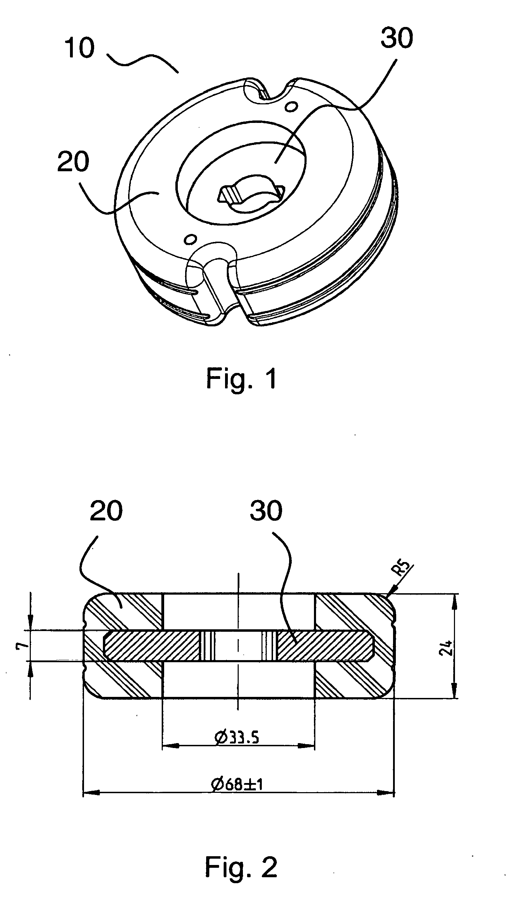

Fig. 1 zeigt ein erfindungsgemäßes Dämpferlager 10, das ein Dämpfungselement 20 sowie einen Einleger 30 umfasst. Das einteilige Dämpfungselement 20 ist im Wesentlichen als kreisförmiger Hohlzylinder ausgebildet. Es weist an zwei sich gegenüberliegenden Stellen Einbuchtungen in der radial äußeren Mantelfläche auf. In Umfangsrichtung verfügt die Mantelfläche über zwei umlaufende Einkerbungen, die lediglich von den Einbuchtungen unterbrochen werden.

Der Einleger 30 ist mittig in dem Dämpfungselement 20 angeordnet. Sein äußerer, kreisrunder Rand wird vollständig vom Dämpfungselement 20 umschlossen.

Die beiden Einbuchtungen dienen in dieser Ausführungsform der Verdrehsicherheit im eingebauten Zustand. Das Gehäuse, in das das Dämpferlager eingebaut wird, weist entsprechend angeordnete Vorsprünge in der Gehäusewand auf, sodass das Dämpferlager hinsichtlich Rotationsbewegungen um die Achse durch seinen Mittelpunkt fixiert ist. Hinsichtlich der Erfindung stellt diese Ausführungsform keine Einschränkung dar. Von der Erfindung sind selbstverständlich auch Dämpferlager ohne Einbuchtungen erfasst.

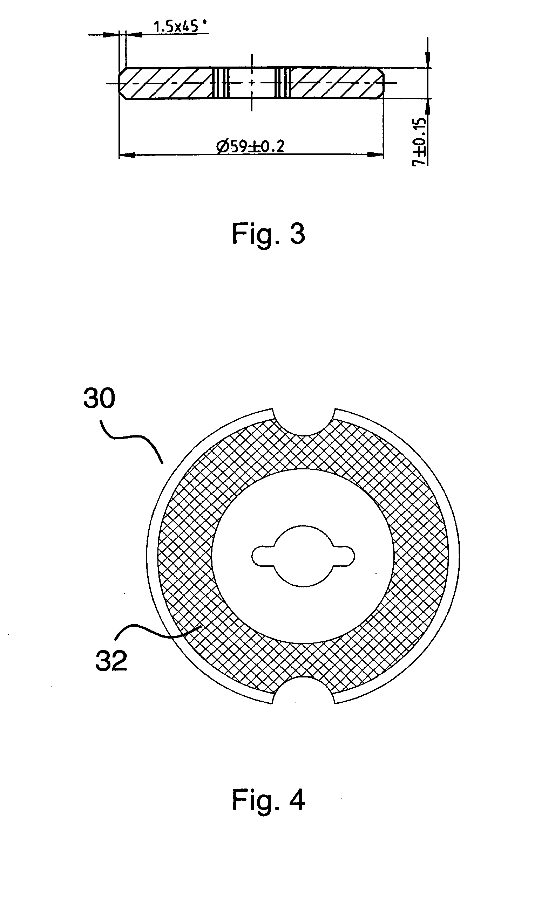

Fig. 2 entspricht einem Längsschnitt durch ein erfindungsgemäßes Dämpferlager 10 gemäß Fig. 1. In Fig. 3 ist der zugehörige Einleger 30 im Detail abgebildet. In dem dargestellten Beispiel kann der Außendurchmesser des Dämpfungselements 20 von 67 mm bis 69 mm betragen bei einem Innendurchmesser von 33,5 mm. Die Höhe des Dämpfungselements 20 beträgt 24 mm. Der Einleger 30 hat einen Außendurchmesser von 59 mm und eine Höhe von 7 mm. Wie der Schnittdarstellung zu entnehmen ist, wird der äußere Rand des Einlegers 30 in diesem Beispiel in axialer Richtung vollständig vom Dämpfungselement 20 umschlossen. Bei exakt konzentrischer Anordnung von Dämpfungselement 20 und Einleger 30 wird der äußere Rand des Einlegers 30 in radialer Richtung von außen nach innen von dem Dämpfungselement 20 um 12,75 mm umschlossen.

Fig. 4 zeigt eine Draufsicht auf die Stirnfläche eines erfindungsgemäßen Einlegers 30. Der Einleger 30 weist ein Profil 32 auf mit einer ersten Gruppe an parallelen Rillen und einer zweiten Gruppe an parallelen Rillen. Die Rillen der ersten Gruppe und diejenigen der zweiten Gruppe kreuzen sich in einem Winkel von etwa 90°. Der Übergang vom äußeren Rand des Einlegers 30 zu seiner Stirnfläche wird durch eine gefaste, kreisringförmige Fläche gebildet. In radialer Richtung erstreckt sich das Profil 32 von der Fasenkante bis etwa zur Hälfte des Abstandes von der Fasenkante zur Bohrung im Zentrum des Einlegers 30. In dem dargestellten Beispiel handelt es sich um einen Einleger aus Aluminium, auf den durch eine Rändelung nach DIN 82 RGV 1,2 ein erfindungsgemäßes Profil aufgebracht wurde.

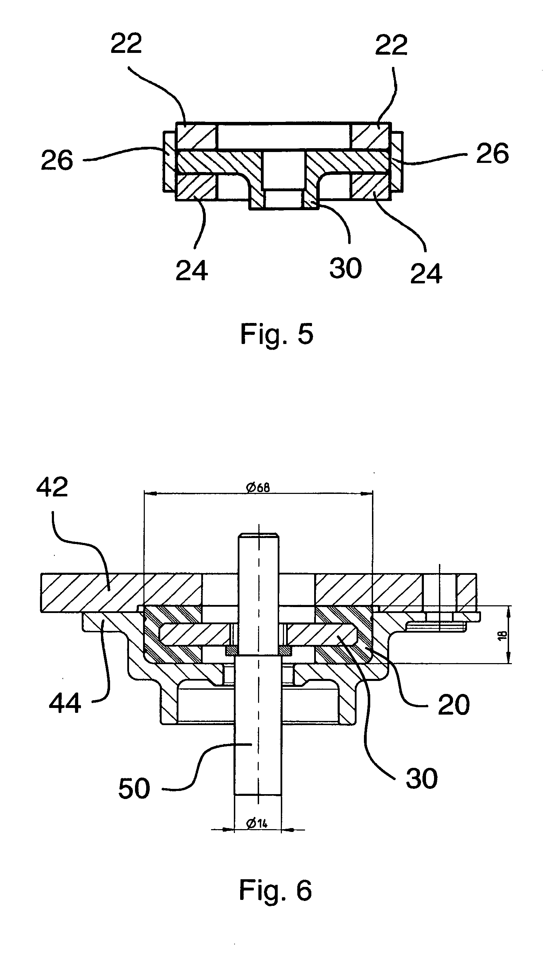

Bei der Ausführungsform eines erfindungsgemäßen Dämpferlagers 10 gemäß Fig. 5 umfasst das Dämpfungselement mehrere Einzelelemente 22, 24, 26. In dem dargestellten Beispiel umfasst das Dämpfungselement ein flaches kreisringförmiges Einzelelement 22, das auf der oberen Stirnfläche des Einlegers 30 aufliegt und seinen äußeren Rand in radialer Richtung von außen nach innen umschließt. Ein weiteres flaches kreisringförmiges Einzelelement 24 umschließt den äußeren Rand des Einlegers 30 auf seiner unteren Stirnfläche in radialer Richtung von außen nach innen. In axialer Richtung wird der äußere Rand des Einlegers 30 von einem dritten Einzelelement 26 komplett umschlossen.

Der Einleger 30 ist mit einem Kragen um die zentrale Bohrung versehen, der sich nach unten über die untere Stirnfläche erstreckt. Bei dem Kragen handelt es sich um eine spezielle Ausgestaltung des Einlegers im Hinblick auf die Aufnahme einer Kolbenstange eines Stoßdämpfers in der zentralen Bohrung. Bezüglich der erfindungsgemäßen Profilierung des Einlegers ist der Kragen unerheblich und findet auch keine Berücksichtigung bei der Bestimmung der Höhe des Einlegers im Bereich, der von den Dämpfungselementen 22, 24, 26 umfasst ist.

Fig. 6 zeigt ein erfindungsgemäßes Dämpferlager gemäß Fig. 2, eingebaut in einem Dämpferlagergehäuse eines Automobils zur dämpfenden Lagerung eines Stoßdämpfers, von dem in Fig. 6 lediglich das obere Ende der Kolbenstange 50 dargestellt ist. Das Dämpferlagergehäuse umfasst ein oberes, erstes Gehäuseteil 42 und ein unteres, zweites Gehäuseteil 44. Das erste Gehäuseteil 42 kann beispielsweise ein separates Bauteil oder ein Teil der Karosserie des Automobils sein. Zur Montage wird zunächst die Kolbenstange an dem Einleger 30 befestigt, z.B. durch Verschrauben. Anschließend wird das Dämpferlager in das Gehäuse eingesetzt und die beiden Gehäuseteile 42 und 44 miteinander verbunden, im dargestellten Beispiel durch Verschrauben. Die axiale Ausdehnung des Gehäuseinnenraums beträgt in diesem Beispiel 18 mm. Das Dämpfungselement 20 gemäß Fig. 2 hat eine Höhe von 24 mm, sodass es im eingebauten Zustand in axialer Richtung vorgespannt ist. In radialer Richtung ist es ebenfalls vorgespannt, da sich bei einer axialen Druckbelastung aufgrund der elastischen Eigenschaften des Dämpfungselements 20 auch sein Außendurchmesser vergrößert.

Bei gattungsgemäßen Dämpferlagern gemäß dem Stand der Technik, die in Automobilen zur elastischen Lagerung von Stoßdämpfern eingesetzt wurden, kam es in der Vergangenheit zu Beschädigungen des Dämpfungselements aufgrund der Relativbewegung zwischen Dämpfungselement und Einleger. Nach dem Austausch durch erfindungsgemäße Dämpferlager wurden bei vergleichbarer Belastungssituation hinsichtlich Betriebsdauer und Fahrleistung des Automobils keine Beschädigungen festgestellt.

Die erfindungsgemäße Gestaltung des Einlegers mit einem Profil, das Erhebungen und/oder Vertiefungen umfasst, reduziert die Relativbewegung zwischen Einleger und Dämpfungselement. Dadurch wird die Lebensdauer des Dämpferlagers deutlich verlängert. Somit können durch Einsatz erfindungsgemäßer Dämpferlager beim Betrieb eines Automobils Kosten eingespart und der Fahrkomfort erhöht werden.

## Patentansprüche

1. Dämpferlager (10) umfassend ein im Wesentlichen hohlzylinderförmiges Dämpfungselement (20, 22, 24, 26) auf der Basis von zelligen Polyisocyanat-Polyadditionsprodukten sowie einen Einleger (30), der von dem Dämpfungselement (20, 22, 24, 26) in radialer und in axialer Richtung zumindest teilweise umschlossen wird, **dadurch gekennzeichnet, dass** der Einleger (30) auf mindestens einer axialen, mit dem Dämpfungselement (20, 22, 24) in Verbindung stehenden Stirnfläche ein Profil (32) mit Vertiefungen und/oder Erhebungen aufweist, wobei die Vertiefungen mehrere Rillen umfassen, die nicht alle konzentrisch und nicht alle parallel verlaufen, und/oder die Erhebungen mehrere Stege umfassen, die nicht alle konzentrisch und nicht alle parallel verlaufen.

2. Dämpferlager nach Anspruch 1, wobei das Profil eine erste Gruppe an parallelen Rillen und eine zweite Gruppe an parallelen Rillen umfasst, wobei sich die Rillen der ersten Gruppe und diejenigen der zweiten Gruppe in einem Winkel von 30° bis 90°, bevorzugt von 45° bis 90°, insbesondere von 70° bis 90° kreuzen.

3. Dämpferlager nach Anspruch 1, wobei das Profil eine erste Gruppe an parallelen Stegen und eine zweite Gruppe an parallelen Stegen umfasst, wobei sich die Stege der ersten Gruppe und diejenigen der zweiten Gruppe in einem Winkel von 30° bis 90°, bevorzugt von 45° bis 90°, insbesondere von 70° bis 90° kreuzen.

4. Dämpferlager nach einem der Ansprüche 1 bis 3, wobei die Tiefe der Vertiefungen und/oder die Höhe der Erhebungen jeweils von 0,1 mm bis 1 mm, bevorzugt von 0,2 mm bis 0,5 mm betragen.

5. Dämpferlager nach einem der Ansprüche 1 bis 4, wobei der Einleger auf beiden axialen Stirnflächen ein Profil (32) aufweist, das Vertiefungen und/oder Erhebungen umfasst.

6. Dämpferlager nach einem der Ansprüche 1 bis 5, wobei der Außendurchmesser des Dämpfungselements (20, 26) von 45 mm bis 85 mm, bevorzugt von 60 mm bis 75 mm, insbesondere von 63 mm bis 68 mm, und die Höhe des Dämpfungselements (20) von 15 mm bis 50 mm, bevorzugt von 20 mm bis 35 mm, insbesondere von 22 mm bis 28 mm beträgt.

7. Dämpferlager nach einem der Ansprüche 1 bis 6, wobei der Außendurchmesser des Einlegers (30) von 40 mm bis 80 mm, bevorzugt von 50 mm bis 70 mm, insbesondere von 55 mm bis 65 mm, und die Höhe des Einlegers (30) im Bereich, der vom Dämpfungselement (20, 22, 24, 26) umfasst ist, von 3 mm bis 20 mm, bevorzugt von 5 mm bis 10 mm, insbesondere von 6 mm bis 8 mm beträgt.

8. Dämpferlager nach einem der Ansprüche 1 bis 7, wobei das Dämpfungselement (20, 22, 24) den Einleger (30) in radialer Richtung von außen nach innen mindestens von 1 mm bis 10 mm, bevorzugt von 3 mm bis 5 mm umschließt.

9. Dämpferlager nach einem der Ansprüche 1 bis 8, wobei das Dämpfungselement (22, 24, 26) mindestens zwei Einzelelemente umfasst.

10. Automobil enthaltend Dämpferlager nach einem der Ansprüche 1 bis 9.

## Claims

1. A damper bearing (10) comprising a substantially hollow cylindrical damping element (20, 22, 24, 26), based on cellular polyisocyanate polyaddition products, and an insert (30), which is at least partially enclosed by the damping element (20, 22, 24, 26) in the radial direction and axial direction, wherein the insert (30) has, on at least one axial face connected to the damping element (20, 22, 24), a profile (32) with depressions and/or elevations, wherein the depressions comprise a plurality of grooves, which do not all extend concentrically and do not all extend in parallel, and/or the elevations comprise a plurality of webs, which do not all extend concentrically and do not all extend in parallel.

2. The damper bearing according to claim 1, wherein the profile comprises a first group of parallel grooves and a second group of parallel grooves, wherein the grooves of the first group and those of the second group intersect at an angle of 30° to 90°, preferably of 45° to 90°, in particular of 70° to 90°.

3. The damper bearing according to claim 1, wherein the profile comprises a first group of parallel webs and a second group of parallel webs, wherein the webs of the first group and those of the second group intersect at an angle of 30° to 90°, preferably of 45° to 90°, in particular of 70° to 90°.

4. The damper bearing according to any one of claims 1 to 3, wherein the depth of the depressions and/or the height of the elevations are/is from 0.1 mm to 1 mm, preferably from 0.2 mm to 0.5 mm.

5. The damper bearing according to any one of claims 1 to 4, wherein the insert has, on both axial faces, a profile (32) comprising depressions and/or elevations.

6. The damper bearing according to any one of claims 1 to 5, wherein the external diameter of the damping element (20, 26) is from 45 mm to 85 mm, preferably from 60 mm to 75 mm, in particular from 63 mm to 68 mm, and the height of the damping element (20) is from 15 mm to 50 mm, preferably from 20 mm to 35 mm, in particular from 22 mm to 28 mm.

7. The damper bearing according to any one of claims 1 to 6, wherein the external diameter of the insert (30) is from 40 mm to 80 mm, preferably from 50 mm to 70 mm, in particular from 55 mm to 65 mm, and the height of the insert (30), in the area covered by the damping element (20, 22, 24, 26), is from 3 mm to 20 mm, preferably from 5 mm to 10 mm, in particular from 6 mm to 8 mm.

8. The damper bearing according to any one of claims 1 to 7, wherein the damping element (20, 22, 24) encloses the insert (30) in the radial direction, from the outside inward, by at least 1 mm to 10 mm, preferably 3 mm to 5 mm.

9. The damper bearing according to any one of claims 1 to 8, wherein the damping element (22, 24, 26) comprises at least two individual elements.

10. An automobile containing damper bearings according to any one of claims 1 to 9.

## Revendications

1. Palier amortisseur (10) comprenant un élément d'amortissement (20, 22, 24, 26) de forme essentiellement cylindrique creuse à base de produits de polyaddition de polyisocyanates cellulaires ainsi qu'un insert (30), qui est au moins en partie entouré par l'élément d'amortissement (20, 22, 24, 26) dans la direction radiale et axiale, **caractérisé en ce que** l'insert (30) présente sur au moins une face frontale axiale en liaison avec l'élément d'amortissement (20, 22, 24) un profil (32) avec des renfoncements et/ou des rehaussements, les renfoncements comprenant plusieurs rainures qui ne s'étendent pas toutes concentriquement et pas toutes parallèlement, et/ou les rehaussements comprenant plusieurs nervures qui ne s'étendent pas toutes concentriquement et pas toutes parallèlement.

2. Palier amortisseur selon la revendication 1, dans lequel le profil comprend un premier groupe de rainures parallèles et un deuxième groupe de rainures parallèles, les rainures du premier groupe et celles du deuxième groupe se croisant suivant un angle de 30° à 90°, de préférence de 45° à 90°, notamment de 70° à 90°.

3. Palier amortisseur selon la revendication 1, dans lequel le profil comprend un premier groupe de nervures parallèles et un deuxième groupe de nervures parallèles, les nervures du premier groupe et celles du deuxième groupe se croisant suivant un angle de 30° à 90°, de préférence de 45° à 90°, notamment de 70° à 90°.

4. Palier amortisseur selon l'une quelconque des revendications 1 à 3, dans lequel la profondeur des renfoncements et/ou la hauteur des rehaussements mesurent à chaque fois de 0,1 mm à 1 mm, de préférence de 0,2 mm à 0,5 mm.

5. Palier amortisseur selon l'une quelconque des revendications 1 à 4, dans lequel l'insert présente sur les deux faces frontales axiales un profil (32) qui comprend des renfoncements et/ou des rehaussements.

6. Palier amortisseur selon l'une quelconque des revendications 1 à 5, dans lequel le diamètre extérieur de l'élément d'amortissement (20, 26) mesure de 45 mm à 85 mm, de préférence de 60 mm à 75 mm, notamment de 63 mm à 68 mm, et la hauteur de l'élément d'amortissement (20) mesure de 15 mm à 50 mm, de préférence de 20 mm à 35 mm, notamment de 22 mm à 28 mm.

7. Palier amortisseur selon l'une quelconque des revendications 1 à 6, dans lequel le diamètre extérieur de l'insert (30) mesure de 40 mm à 80 mm, de préférence de 50 mm à 70 mm, notamment de 55 mm à 65 mm, et la hauteur de l'insert (30), dans la région entourée par l'élément d'amortissement (20, 22, 24, 26), mesure de 3 mm à 20 mm, de préférence de 5 mm à 10 mm, notamment de 6 mm à 8 mm.

8. Palier amortisseur selon l'une quelconque des revendications 1 à 7, dans lequel l'élément d'amortissement (20, 22, 24) entoure l'insert (30) dans la direction radiale de l'extérieur vers l'intérieur sur au moins 1 mm à 10 mm, de préférence sur 3 mm à 5 mm.

9. Palier amortisseur selon l'une quelconque des revendications 1 à 8, dans lequel l'élément d'amortissement (22, 24, 26) comprend au moins deux éléments individuels.

10. Automobile comprenant un palier amortisseur selon l'une quelconque des revendications 1 à 9.
